# EUROPÄISCHE PATENTSCHRIFT

(11) **EP 4 069 036 B1**
(45) Veröffentlichungstag und Bekanntmachung des Hinweises auf die Patenterteilung: **27.09.2023**
(21) Anmeldenummer: 20816456.6
(22) Anmeldetag: 27.11.2020
(51) Int. Cl.: A47B 88/493

(54) **AUSZUGSFÜHRUNG**
PULL-OUT GUIDE
GUIDE COULISSANT

(30) Priorität: 03.12.2019 DE 102019132872
(43) Veröffentlichungstag der Anmeldung: 12.10.2022
(73) Patentinhaber: Paul Hettich GmbH & Co. KG, 32278 Kirchlengern (DE)
(72) Erfinder: LIMBERG, Guido, 32108 Bad Salzuflen (DE); MERTINS, Stefan, 32257 Bünde (DE); HEEK, Jürgen, 32130 Enger (DE)
(74) Vertreter: Dantz, Jan Henning
(86) Internationale Anmeldenummer: PCT/EP2020/083663
(87) Internationale Veröffentlichungsnummer: WO 2021/110556

(56) Entgegenhaltungen:
- WO-A1-2015/194696
- JP-U- H0 574 970

## Beschreibung

Die vorliegende Erfindung betrifft eine Auszugsführung mit mindestens zwei relativ zueinander bewegbaren Schienen, an denen jeweils mindestens eine Lauffläche ausgebildet ist, an denen mindestens ein Wälzkörper geführt ist, der mit mindestens einer Kontaktfläche entlang der jeweiligen Lauffläche abrollbar ist, wobei die mindestens eine Kontaktfläche des mindestens einen Wälzkörpers eine Wellenform aufweist.

Die DE 10 2012 106 751 A1 offenbart eine Auszugsführung mit Wälzkörpern zwischen zwei Auszugsschienen, die unterschiedlich ausgebildet sind. Mindestens ein erster Wälzkörper weist einen größeren Durchmesser und ein kleineres E-Modul auf als mindestens ein zweiter Wälzkörper. Dadurch können Fertigungstoleranzen besser ausgeglichen werden. Durch die Kugelform der Wälzkörper wird Schmierfett bei einer Hin- und Herbewegung der Schienen zu den Enden der Laufbahnen verschoben, so dass es die Wälzkörper nicht mehr erreichen kann.

Die JP 2001 017255 offenbart eine Rolle für Schubkästen, die eine Vielzahl von Rippen aus einem elastischen Material aufweist, die bei Belastung deformiert werden können. Auch hier tritt das Problem auf, dass an der Kontaktfläche Schmierfett zu den Endpunkten der jeweiligen Lauffläche verschoben wird.

JP H05 74970 U offenbart eine Auszugsführung mit Wälzkörpern zwischen Schienen, die im Hinblick auf den Durchmesser unterschiedliche Bereiche besitzen.

Es ist daher Aufgabe der vorliegenden Erfindung, eine Auszugsführung mit einer verbesserten Führung der Schienen sowie einer optimierten Schmierung zu schaffen.

Diese Aufgabe wird mit einer Auszugsführung mit den Merkmalen des Anspruches 1 gelöst.

Bei der erfindungsgemäßen Auszugsführung ist mindestens ein Wälzkörper vorgesehen, der mindestens eine Kontaktfläche mit einer Wellenform aufweist. Dadurch bleibt ein Kontaktpunkt oder eine Kontaktlinie beim Abrollen des Wälzkörpers nicht exakt in einer streifenförmigen Linie in Längsrichtung der Schiene, sondern aufgrund der Wellenform ist auch die Abwicklung der Kontaktfläche wellenförmig, so dass das Schmierfett zwischen Wälzkörper und Lauffläche nicht nur zu den Endpunkten verschoben wird, sondern auch senkrecht hierzu. Durch den Schlupf der Wälzkörper relativ zu der Lauffläche kann das Schmierfett neu verteilt werden, weshalb die Schmierung über eine längere Laufzeit im Bereich der Lauffläche erhalten bleibt.

Vorzugsweise ist die mindestens eine Kontaktfläche durch mindestens einen Ring gebildet, der in eine axiale Richtung wellenförmig verläuft und in radiale Richtung im Wesentlichen mit dem gleichen äußeren Radius ausgebildet ist. Dadurch werden die Schienen mit ruhigem gleichmäßigem Lauf relativ zueinander geführt, auch wenn bezogen auf die Drehachse des Wälzkörpers die Kontaktfläche beim Abrollen des Wälzkörpers in axiale Richtung wellenförmig alterniert. Dabei kann optional ein einziger Ring eine Kontaktfläche des Wälzkörpers ausbilden, vorzugsweise sind allerdings mehrere Ringe nebeneinander angeordnet, die jeweils eine Kontaktfläche ausbilden. Es können beispielsweise zwischen 3 und 10 Ringe nebeneinander eingesetzt werden. Die Kontaktfläche an den Ringen kann dabei parallel verlaufen, oder ein Wälzkörper kann auch Ringe aufweisen, die beispielsweise gegenläufig wellenförmige Ringe ausbilden, d.h. die Wellen erstrecken sich in einer Abwicklung jeweils in gegenüberliegende Richtungen. Die Form der Wellen ist erfindungsgemäß sinusförmig ausgebildet. Die Lauffläche an den Schienen ist vorzugsweise zumindest über eine Teilstrecke eben ausgebildet, so dass die Lauffläche streifenförmig ausgebildet ist. Innerhalb der streifenförmigen Lauffläche rollt die in der Abwicklung wellenförmige Kontaktfläche des mindestens einen Wälzkörpers ab.

Der mindestens eine Wälzkörper kann dabei aus Kunststoff, Metall oder einem Verbundmaterial hergestellt sein. Die Ringe an der Außenseite des Wälzkörpers können dabei integral mit einem Kern ausgebildet sein, oder die Ringe sind an einer Hülse ausgebildet, die einen Kern aus einem anderen Material umgibt.

Das Verhältnis der Amplitude der Welle zu der Breite der Kontaktfläche beträgt vorzugsweise zwischen 1,5:1 bis 5:1, insbesondere 1,8:1 bis 3:1. Schon eine geringfügige Amplitude sorgt dafür, dass das Schmiermittel zumindest teilweise auch seitlich bezogen auf die Längsrichtung verschoben wird und nicht nur zu den Endbereichen, an denen es nicht mehr in Eingriff mit den Wälzkörpern gelangen kann.

Vorzugsweise ist die geometrische Grundform eines Ringes aus vier oder sechs Segmenten zusammengesetzt ist, wobei jedes Segment in etwa einem Viertelkreis oder einem Sechstelkreis entspricht.

In einer weiteren Ausgestaltung weist die Auszugsführung Wälzkörper auf, die in wenigstens einem Wälzkörperkäfig aufgenommen sind, wobei mehrere Wälzkörper in dem Wälzkörperkäfig in Verfahrrichtung hintereinander an den Laufflächen abrollen und wobei mindestens einer der hintereinander gelagerten Wälzkörper die wellenförmige Kontaktfläche aufweist.

Für eine optimierte Schmierung der Laufflächen, auf denen ein Wälzkörper mit der wellen-förmigen Kontaktfläche abrollen, können die Wälzkörper an Ihrem äußeren Umfang mit einem Schmiermittel versehen sein. Gerade bei mehreren Ringen an einem Wälkzörper kann somit zwischen den Ringen eine Aufnahme für Schmiermittel gebildet sind, das während des Verfahrens auf die Laufbahn abgegeben werden kann.

Ferner kann der Wälzkörper eine Lagerstelle in Form eines Stutzens oder einer Aussparung aufweisen, so dass die Wälzkörper gegen ein Herausausfallen aus einem Wälzkörperkäfig gesichert sind.

Vorzugsweise ist die Grundform jedes Wälzkörpers im Bereich von mehreren Kontaktflächen zylinderförmig oder balllig.

Die Erfindung wird nachfolgend anhand mehrerer Ausführungsbeispiele mit Bezug auf die beigefügten Zeichnungen näher erläutert. Es zeigen:
- Figur 1: eine perspektivische Ansicht einer erfindungsgemäßen Auszugsführung;
- Figur 2: eine Ansicht der Auszugsführung der Figur 1 ohne eine Laufschiene;
- Figur 3: eine perspektivische Ansicht der Wälzkörpereinheit der Auszugsführung der Figur 2;
- Figur 4: eine Ansicht einer modifizierten Auszugsführung;
- Figur 5: eine Detailansicht der Auszugsführung der Figur 4;
- Figuren 6A bis 6C: mehrere Ansichten eines Wälzkörpers in einer ersten Variante;
- Figuren 7A bis 7C: mehrere Ansichten eines Wälzkörpers in einer zweiten Variante;
- Figuren 8A bis 8C: mehrere Ansichten eines Wälzkörpers in einer dritten Variante;
- Figuren 9A bis 9C: mehrere Ansichten eines Wälzkörpers in einer vierten Variante,
- Figuren 10A bis 10C: mehrere Ansichten eines Wälzkörpers in einer fünften füntenVariante;
- Figuren 11A bis 11E: mehrere Ansichten eines Ringes für einen Wälzkörper;
- Figur 12: eine Detailansicht eines scheibenförmigen Wälzkörpers mit einer einzigen wellenförmigen Kontaktfläche;
- Figur 13: eine Ansicht eines modifizierten Wälzkörpers, und
- Figuren 14A und 14B: mehrere Ansichten eines Ringes für den modifizierten Wälzkörper der Figur 13.

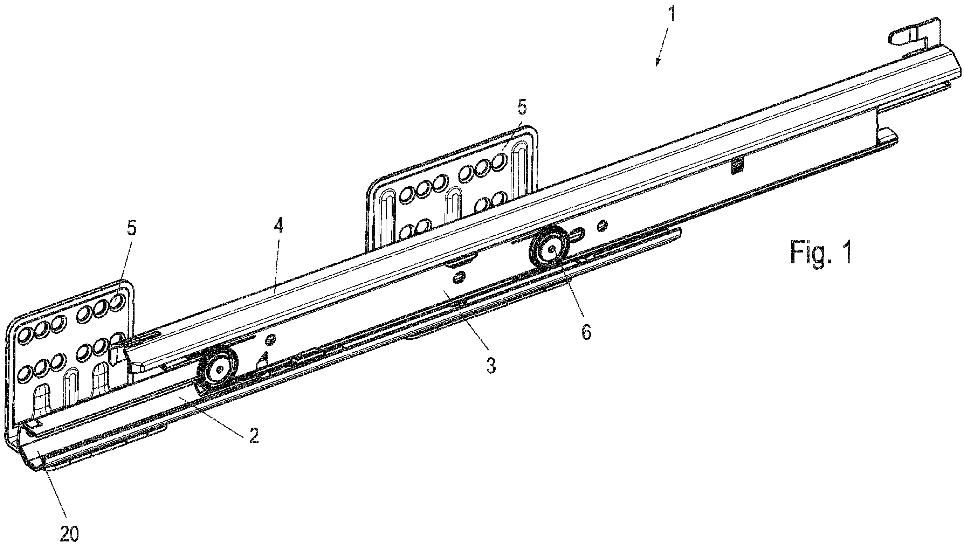

In Figur 1 umfasst eine Auszugsführung 1 eine stationäre Führungsschiene 2, die über einen oder mehrere Haltewinkel 5 an einem Korpus eines Möbels oder Haushaltsgerätes festlegbar ist. An der Führungsschiene 2 ist eine Mittelschiene 3 verfahrbar gehalten, an der wiederum eine Laufschiene 4 verfahrbar ist. Damit die Mittelschiene 3 mit der halben Geschwindigkeit der Laufschiene 4 bewegbar ist, ist eine Synchronisationseinrichtung 6 vorgesehen, die optional auch weggelassen werden kann. Die aus gebogenem Stahlblech hergestellten Schienen sind über Wälzkörper 10 relativ zueinander verfahrbar. Die Wälzkörper 10 sind in einem Wälzkörperkäfig 8 gehalten. Die Synchronisationseinrichtung 6 kann auch die Wälzkörperkäfige 8 miteinander synchronsieren. Es ist Ebenfalls möglich, dass die Synchronisationseinrichtung 6 sowohl die Wälzkörperkäfige 8 als auch die Schienen 2, 3, 4 miteinander synchronisiert.

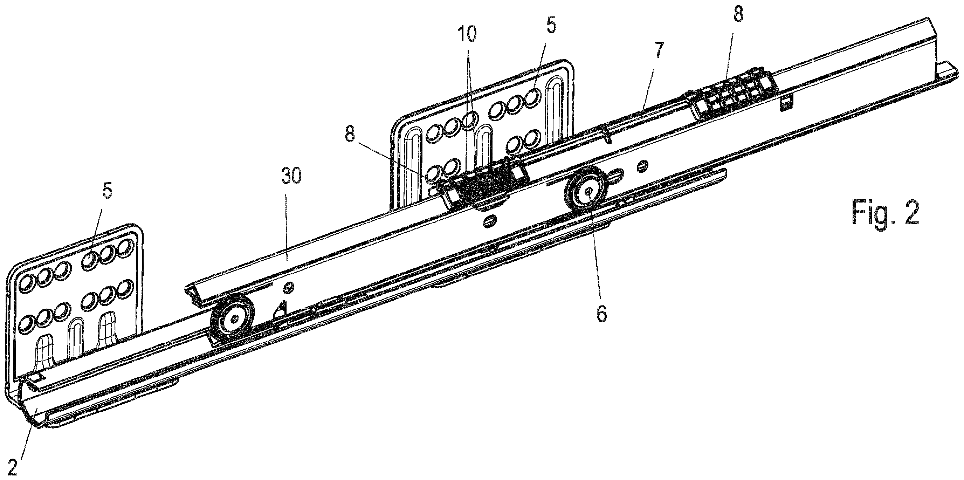

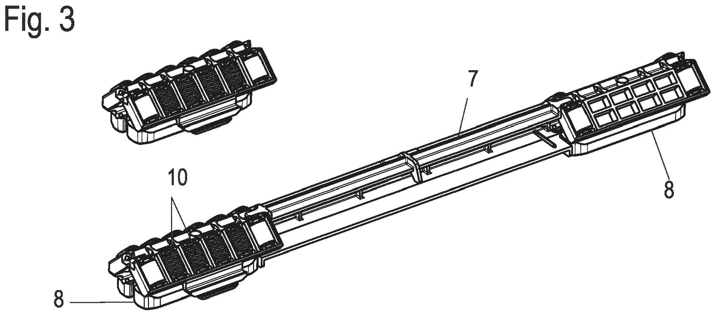

In Figur 2 ist die Laufschiene 4 weggelassen worden, und es ist erkennbar, dass an der Mittelschiene 3 mehrere streifenförmige Laufflächen 30 ausgebildet sind, an denen Wälzkörper 10 abrollbar sind. Die Wälzkörper 10 sind dabei in einem Wälzkörperkäfig 8 gehalten, wobei zwei Wälzkörperkäfige 8 vorgesehen sind, die über einen Abstandshalter 7 in Form einer Stange in einem definierten Abstand angeordnet sind. In Figur 3 sind die Wälzkörperkäfige 8 mit den Wälzkörpern 10 im Detail gezeigt. Es ist erkennbar, dass eine Einheit von mehreren Wälzkörpern 10 jeweils an einer Lauffläche 20, 30 abrollt. Dabei sind zwischen zwei Schienen jeweils mehrere Laufflächen mit Wälzkörpern vorgesehen, beispielsweise zwei oder drei Laufflächen.

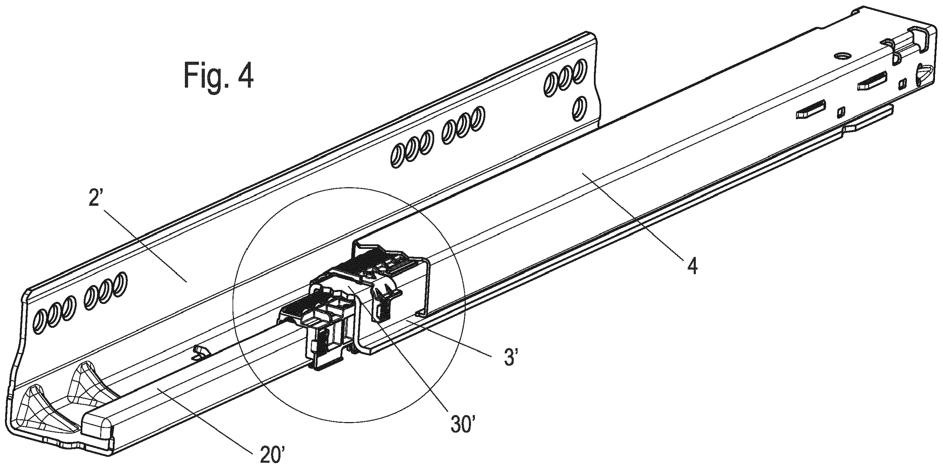

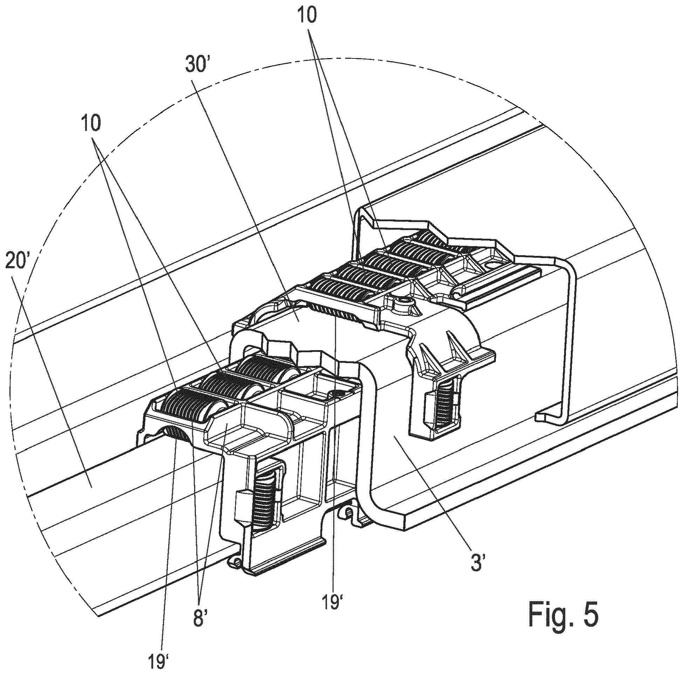

In Figur 4 ist eine modifizierte Auszugsführung gezeigt, bei der eine stationäre Führungsschiene 2' eine horizontale Lauffläche 20' ausbildet, an der Wälzkörper 10 abrollen, die in einem modifizierten Wälzkörperkäfig 8' gehalten sind, wie dies insbesondere in der Detailansicht der Figur 5 erkennbar ist. Eine Mittelschiene 3' besitzt eine obere horizontale Lauffläche 30', an der weitere Wälzkörper 10 abrollen, die in einem Wälzkörperkäfig 8' gehalten sind. Die Geometrie der Schienen der Auszugsführung kann je nach Anforderung frei gewählt werden. Es ist auch möglich, statt drei Schienen nur zwei Schienen für eine Auszugsführung vorzusehen.

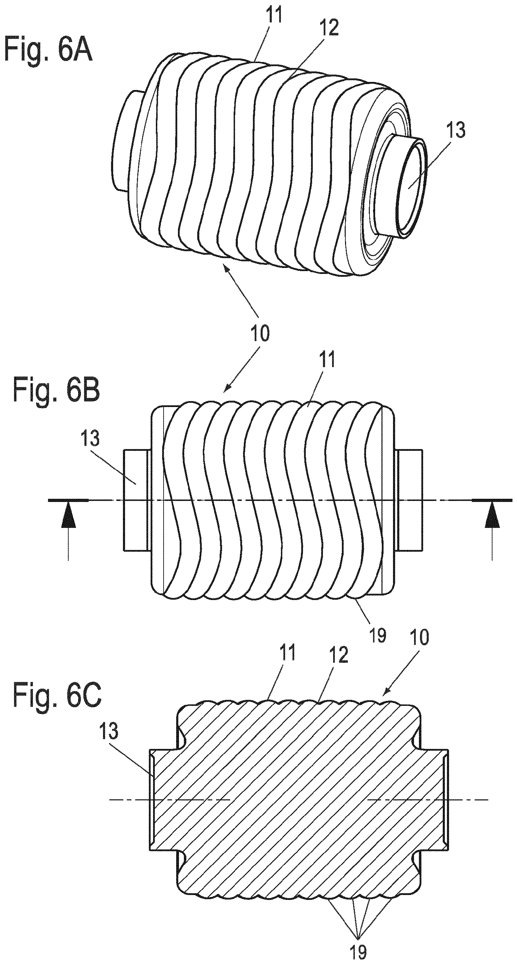

In den Figuren 6A bis 6C ist ein Wälzkörper 10 im Detail gezeigt, der in einem der Wälzkörperkäfige 8 oder 8' gehalten ist. Der Wälzkörper 10 umfasst an seinem äußeren Umfang eine Kontaktfläche 19, 19', die aus einer Vielzahl von Ringen 11 gebildet ist, zwischen denen Rillen 12 vorgesehen sind. Die Ringe 11 sind nicht in einer senkrecht zur axialen Richtung angeordneten Ebene vorgesehen, sondern verlaufen zu dieser Ebene wellenförmig. In einer Abwicklung verlaufen die Kontaktflächen 19, 19' der Ringe 11 somit auf den streifenförmigen Laufflächen 30 und 30' wellenförmig, so dass Schmiermittel nicht nur in Längsrichtung der Schienen verschoben wird, sondern teilweise auch seitlich hierzu, so dass aufgrund des Schlupfes zwischen Wälzkörper und Schienen das Schmiermittel länger zur Schmierung zwischen Wälzkörper und Schienen erhalten bleibt.

In den Figuren 6A bis 6C ist der Wälzkörper 10 einstückig ausgebildet, beispielsweise aus Kunststoff oder Metall. An gegenüberliegenden Stirnseiten ist jeweils ein Stutzen 13 ausgebildet, der in eine Aufnahme an den Wälzkörperkäfig 8 oder 8' einfügbar ist.

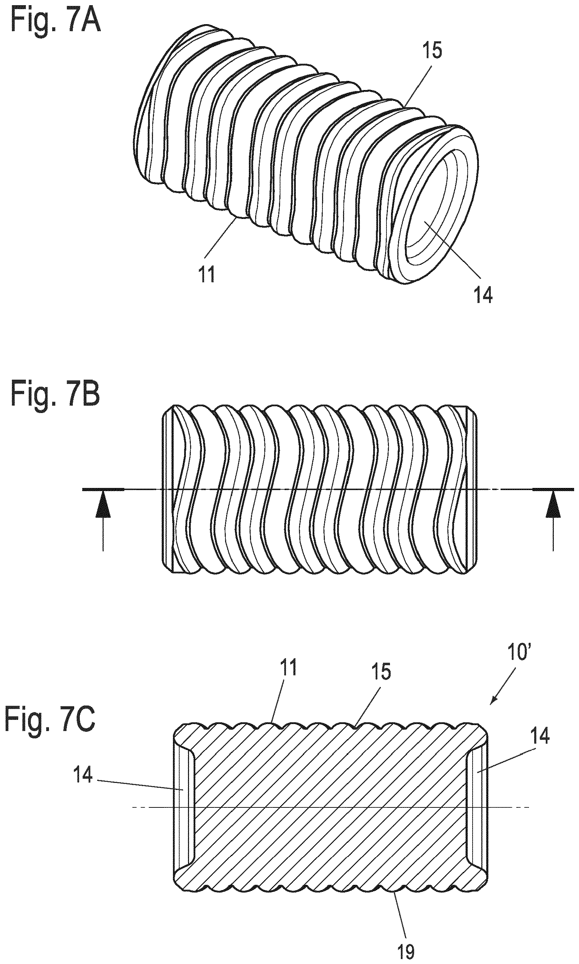

In den Figuren 7A bis 7C ist ein modifizierter Wälzkörper 10' gezeigt, bei dem der Stutzen 13 weggelassen wurde, und an gegenüberliegenden Stirnseiten ist jeweils eine Aufnahme oder Aussparung 14 vorgesehen. In die Aussparung 14 kann ein Vorsprung hineinragen, so dass der Wälzkörper 10' um den Vorsprung drehbar gelagert ist. Zudem sind die Ringe 11 mit etwas anderer Geometrie ausgebildet, und der Wälzkörper besitzt einen geringeren Durchmesser als bei Figur 6. Zwischen den Ringen 11 sind tiefere Nuten 15 vorgesehen, die in der Schnittansicht der Figur 7C eine stärker wellenförmige Oberfläche ausbilden als bei Figur 6. Die Höhe der Ringe 11 kann beispielsweise zwischen 0,1 mm bis 1 mm liegen, um eine entsprechende Profilierung an der Außenseite zu bewirken.

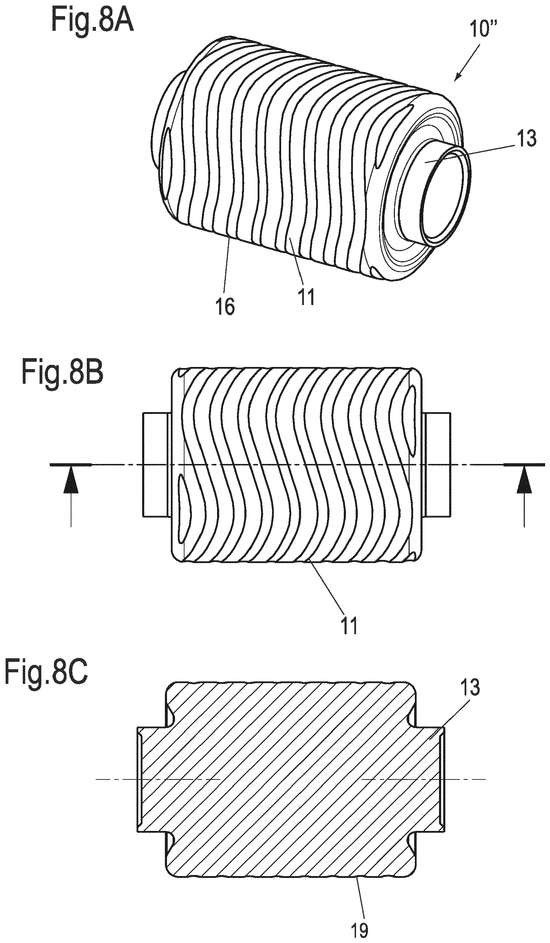

In den Figuren 8A bis 8C ist eine weitere Ausgestaltung eines Wälzkörpers 10" gezeigt, bei dem an der Außenseite eine Vielzahl von Ringen 11 ausgebildet sind, die nur durch kleine Spalte 16 voneinander getrennt sind, wobei in der Schnittansicht gemäß Figur 8C die äußere Umfangsfläche des Wälzkörpers 10" im Wesentlichen eben ausgebildet ist, da die Spalte 16 kaum sichtbar sind. Dennoch kann die Kontaktfläche 19 an Ringen 11 ausgebildet sein, die durch die Spalte 16 unterteilt sind.

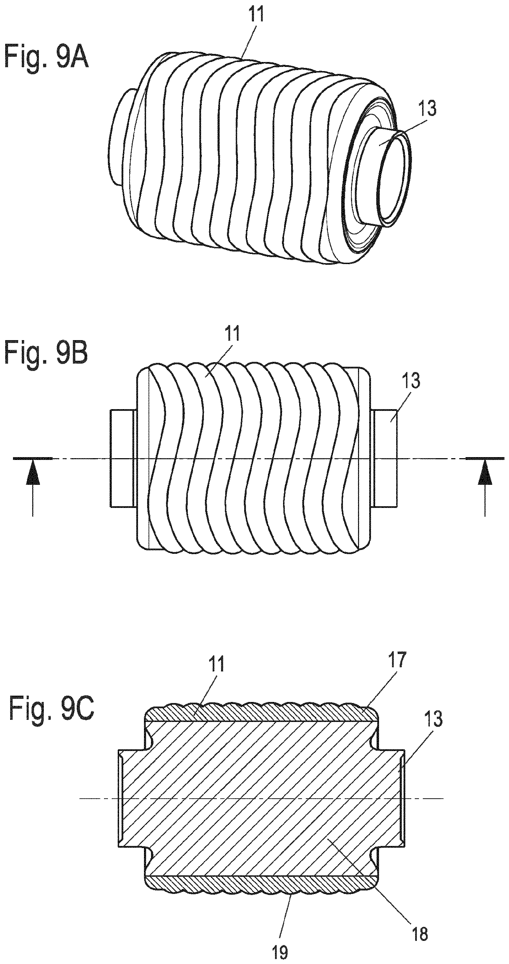

In den Figuren 9A bis 9C ist ein Wälzkörper gezeigt, der ähnlich zu Figur 6 ausgebildet ist, allerdings einen inneren Kern 18 und einen äußeren Mantel 17 aufweist. An dem äußeren Mantel 17 sind die Ringe 11 und dazwischen angeordnete Rillen 12 ausgebildet, während der innere Kern 18 den äußeren Mantel 17 stützt. Dabei können Mantel 17 und Kern 18 aus unterschiedlichen Materialien bestehen und/oder unterschiedliche Eigenschaften aufweisen.

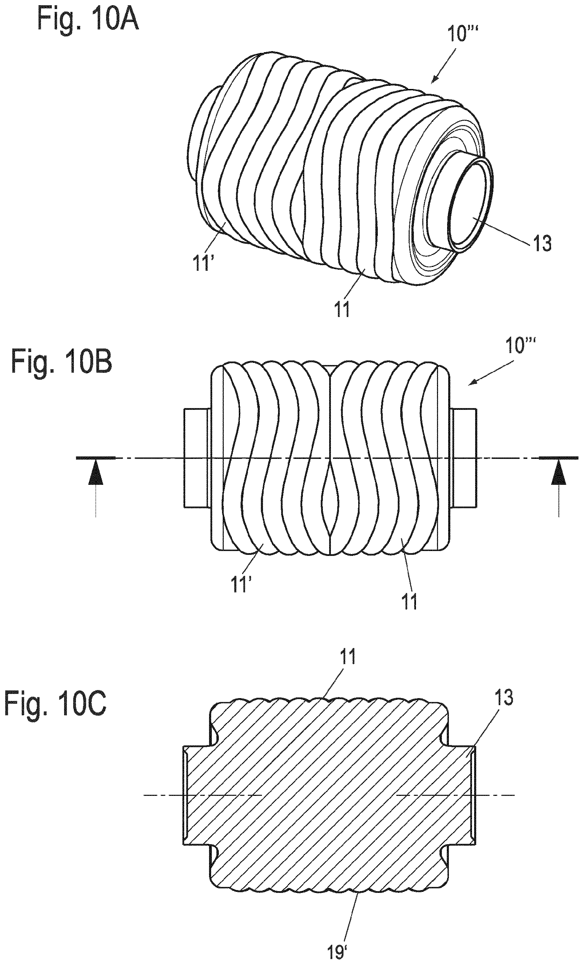

In den Figuren 10A bis 10C ist eine Variante eines Wälzkörpers 10‴ gezeigt, bei dem Ringe 11 und 11' vorgesehen sind, die wellenförmig ausgebildet sind und in gegenläufige Richtungen ausgerichtet sind. In einer Abwicklung würden die Ringe 11 und 11' gegenläufig nach außen und innen verlaufen. Auch durch diese gegenläufige Ausrichtung der Ringe 11 und 11' lässt sich die Führung zwischen zwei Schienen einer Auszugsführung 1 oder 1' verbessern.

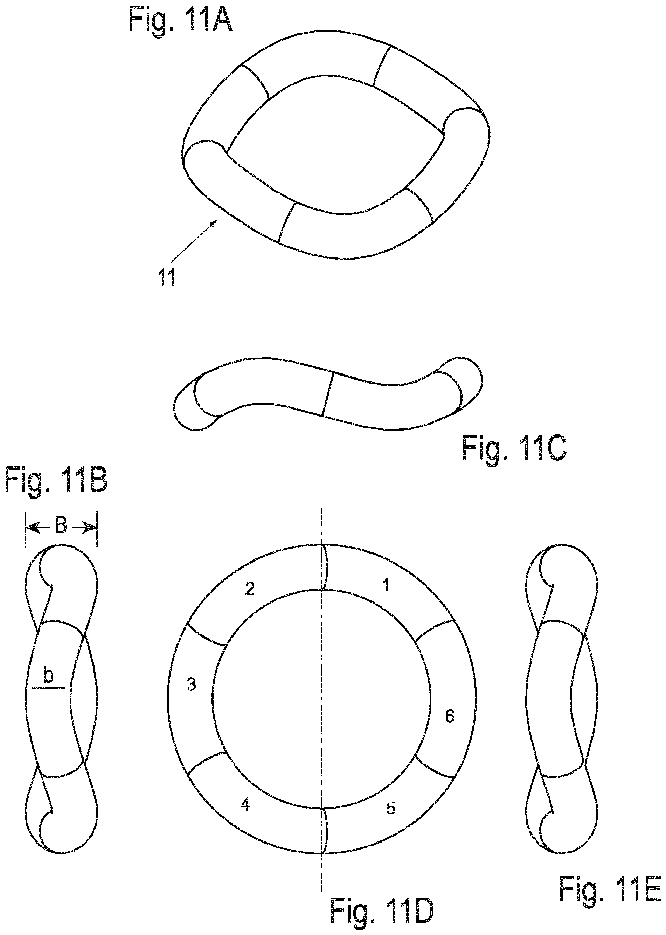

In den Figuren 11A bis 11E ist ein Ring 11 in mehreren Ansichten gezeigt. Der Ring 11 besitzt eine Amplitude B, also der Abstand der Scheitelpunkte in axiale Richtung. Demgegenüber ist die Breite b des Ringes 11bzw. die Kontaktfläche 19 eingezeichnet, die schmaler ausgebildet ist als die Amplitude. Das Verhältnis der Amplitude B der Welle und der Breite b der Kontaktfläche 19 beträgt vorzugsweise zwischen 1,5:1 bis 5:1. Dabei können jeweils zwei Scheitelpunkte auf jeder Seite pro Umdrehung des Ringes 11 vorgesehen sein. Wie in der Figur 11D gezeigt, kann der Ring 11 aus mehreren Segmenten, in diesem Fall sechs, zusammengesetzt sein. Es sind auch vier Segmente oder eine andere Anzahl denkbar.

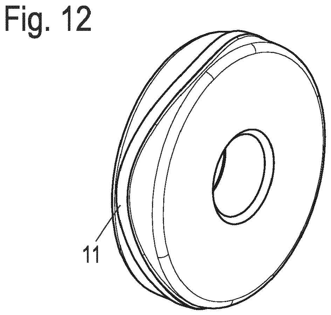

In Figur 12 ist ein Wälzkörper mit nur einer einzigen Kontaktfläche 19 in Form eines Ringes 11 gezeigt, der sich entlang einer zylindrischen Umfangsfläche erstreckt. Es ist erkennbar, dass der Ring in axiale Richtung zwischen den Stirnseiten wellenförmig verläuft, aber den gleichen Durchmesser besitzt.

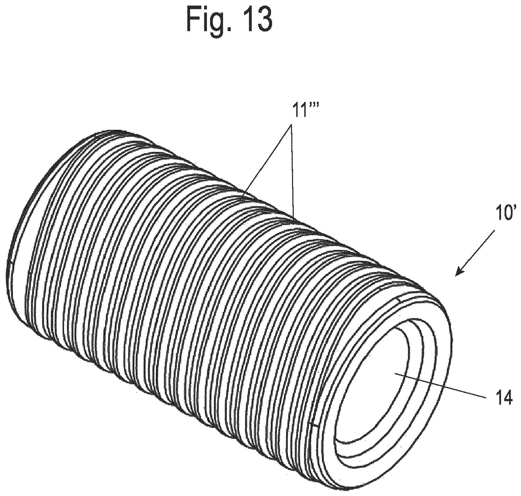

Figur 13 zeigt einen Wälzkörper 10' ähnlich zu Figur 7, der aus einer Vielzahl von Ringen 11" gebildet ist.

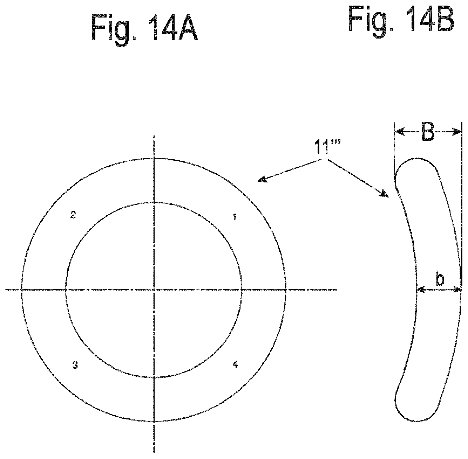

Einer der Ringe 11" ist in Figur 14 A und B im Detail gezeigt. Anders als der Ring der Figur 11 besteht der Ring 11" aus nur vier Segmenten, die jeweils einen Viertelkreis einnehmen. Das Verhältnis der Amplitude B der Welle des Ringes 11" und der Breite b der Kontaktfläche 19 kann wie bei dem Ausführungsbeispiel der Figur 11 ausgebildet sein.

Die vorstehenden Ausführungsbeispiele können auch beliebig miteinander kombiniert werden. Die Anzahl der Ringe 11, 11' pro Wälzkörper 10, 10', 10", 10‴ kann beispielsweise zwischen 3 und 10 liegen, je nach Breite der einzelnen Ringe. Zudem kann das Material der Wälzkörper Kunststoff, Metall oder ein Verbundmaterial umfassen.

Es kann auch vorteilhaft sein, unterschiedliche Arten von Wälzkörpern 10 in einem Wälzkörperkäfig 8, 8' anzuordnen, beispielsweise Wälzkörper 10, 10', 10", 10‴ mit Ringen 11, 11' und Wälzkörper ohne Ringe.

### Bezugszeichenliste

- 1, 1': Auszugsführung
- 2, 2': Führungsschiene
- 3, 3': Mittelschiene
- 4: Laufschiene
- 5: Haltewinkel
- 6: Synchronisationseinrichtung
- 7: Abstandshalter
- 8, 8': Wälzkörperkäfig
- 10, 10', 10", 10‴: Wälzkörper
- 11, 11', 11": Ring
- 12: Rille
- 13: Stutzen
- 14: Aussparung
- 15: Nut
- 16: Spalt
- 17: Äußerer Mantel
- 18: Innerer Kern
- 19, 19': Kontaktfläche
- 20, 20': Lauffläche
- 30, 30': Lauffläche
- b: Breite
- B: Amplitude

## Patentansprüche

1. Auszugsführung (1, 1') mit mindestens zwei relativ zueinander bewegbaren Schienen (2, 3, 4; 2', 3', 4'), an denen jeweils mindestens zwei Lauffläche (20, 30; 20', 30') ausgebildet sind, an denen mindestens ein Wälzkörper (10, 10', 10", 10‴) geführt ist, der mit mindestens einer Kontaktfläche (19, 19') entlang der jeweiligen Lauffläche (20, 30; 20', 30') abrollbar ist, wobei die mindestens eine Kontaktfläche (19, 19') des mindestens einen Wälzkörpers (10, 10', 10", 10‴) eine Wellenform aufweist, **dadurch gekennzeichnet, dass** die Wellenform der Kontaktfläche (19, 19') in einer Abwicklung sinusförmig ausgebildet ist.

2. Auszugsführung nach Anspruch 1, **dadurch gekennzeichnet, dass** die mindestens eine Kontaktfläche (19, 19') durch mindestens einen Ring (11, 11') gebildet ist, der in eine axiale Richtung wellenförmig und in eine radiale Richtung im Wesentlichen mit gleichem Radius ausgebildet ist.

3. Auszugsführung nach Anspruch 1 oder 2, **dadurch gekennzeichnet, dass** mehrere nebeneinander angeordnete Ringe (11, 11') eine Kontaktfläche (19, 19') ausbilden.

4. Auszugsführung nach Anspruch 3, **dadurch gekennzeichnet, dass** die Ringe aus Kunststoff, Metall oder einem Verbundmaterial hergestellt sind.

5. Auszugsführung nach einem der vorhergehenden Ansprüche, **dadurch gekennzeichnet, dass** das Verhältnis der Amplitude (B) der Welle und der Breite (b) der Kontaktfläche (19, 19') 1,5:1 bis 5:1, insbesondere 1,8:1 bis 3:1, ist.

6. Auszugsführung nach einem der vorhergehenden Ansprüche, **dadurch gekennzeichnet, dass** die Laufflächen (20, 30; 20', 30') an den Schienen (2, 3, 4; 2', 3', 4') zumindest auf einer Teilstrecke eben ausgebildet sind.

7. Auszugsführung nach einem der vorhergehenden Ansprüche, **dadurch gekennzeichnet, dass** in einer Abwicklung mindestens zwei Scheitelpunkte auf beiden Seiten pro Umdrehung des Wälzkörpers (10, 10', 10", 10‴) vorgesehen sind.

8. Auszugsführung nach einem der vorhergehenden Ansprüche, **dadurch gekennzeichnet, dass** zwischen zwei Ringen jeweils eine Rille (12) oder eine Nut (15) angeordnet ist.

9. Auszugsführung nach einem der vorhergehenden Ansprüche 2 bis 8, **dadurch gekennzeichnet, dass** die geometrische Grundform des Ringes (11, 11') aus vier oder sechs Segmenten zusammengesetzt ist, wobei jedes Segment in etwa einem Viertelkreis oder einem Sechstelkreis entspricht.

10. Auszugsführung nach einem der vorhergehenden Ansprüche, **dadurch gekennzeichnet, dass** die Auszugsführung (1, 1') Wälzkörper (10, 10', 10", 10‴) aufweist, die in wenigstens einen Wälzkörperkäfig (8, 8') aufgenommen sind, wobei mehrere Wälzkörper (10, 10', 10", 10‴) in dem Wälzkörperkäfig hintereinander an den Laufflächen (20, 30; 20', 30') abrollen und wobei mindestens einer der hintereinander gelagerten Wälzkörper (10, 10', 10", 10‴) die wellenförmige Kontaktfläche (19, 19') aufweist.

11. Auszugsführung nach Anspruch 10, **dadurch gekennzeichnet, dass** die Laufflächen (20, 30; 20', 30') auf denen ein Wälzkörper mit der wellenförmigen Kontaktfläche (19, 19') abrollt, mit einem Schmiermittel versehen sind.

12. Auszugsführung nach einem Anspruch 10 oder 11, **dadurch gekennzeichnet, dass** der Wälzkörper (10, 10', 10", 10‴) eine Lagerstelle in Form eines Stutzens 13 oder einer Aussparung 14 aufweist, so dass die Wälzkörper (10, 10', 10", 10‴) gegen herausausfallen aus dem Wälzkörperkäfig (8, 8') in dem Wälzkörperkäfig (8, 8`) gesichert sind.

13. Auszugsführung nach einem der vorhergehenden Ansprüche, **dadurch gekennzeichnet, dass** die Grundform des Wälzkörpers (10, 10', 10", 10‴) im Bereich von mehreren Kontaktflächen zylinderförmig oder balllig ist.

## Claims

1. Pull-out guide (1, 1') having at least two rails (2, 3, 4; 2', 3', 4') which can be moved relative to one another and on each of which at least two running surfaces (20, 30; 20', 30') are formed, on which at least one rolling element (10, 10', 10", 10‴) is guided, which can be rolled with at least one contact surface (19, 19') along the respective running surface (20, 30; 20', 30'), wherein the at least one contact surface (19, 19') of the at least one rolling element (10, 10', 10", 10‴) has a corrugated shape, **characterized in that** the corrugation of the contact surface (19, 19') is sinusoidal in an unwinding.

2. The pull-out guide according to claim 1, **characterized in that** the at least one contact surface (19, 19') is formed by at least one ring (11, 11') which is corrugated in an axial direction and has substantially the same radius in a radial direction.

3. The pull-out guide according to claim 1 or 2, **characterized in that** a plurality of rings (11, 11') arranged side by side form a contact surface (19, 19').

4. The pull-out guide according to claim 3, **characterized in that** the rings are made of plastic, metal or a composite material.

5. The pull-out guide according to one of the preceding claims, **characterized in that** the ratio of the amplitude (B) of the corrugation and the width (b) of the contact surface (19, 19') is 1.5:1 to 5:1, in particular 1.8:1 to 3:1.

6. The pull-out guide according to one of the preceding claims, **characterized in that** the running surfaces (20, 30; 20', 30') on the rails (2, 3, 4; 2', 3', 4') are designed to be flat at least on a partial section.

7. The pull-out guide according to one of the preceding claims, **characterized in that** in an unwinding at least two vertices are provided on both sides per revolution of the rolling element (10, 10', 10", 10‴).

8. The pull-out guide according to one of the preceding claims, **characterized in that** a gouge (12) or a groove (15) is arranged between two rings in each case.

9. The pull-out guide according to any one of the preceding claims 2 to 8, **characterized in that** the basic geometric shape of the ring (11, 11') is composed of four or six segments, each segment corresponding approximately to a quarter circle or a sixth circle.

10. The pull-out guide according to one of the preceding claims, **characterized in that** the pull-out guide (1, 1') has rolling elements (10, 10', 10", 10‴) which are accommodated in at least one rolling element cage (8, 8'), a plurality of rolling elements (10, 10', 10", 10‴) in the rolling element cage rolling one behind the other on the running surfaces (20, 30; 20', 30') and wherein at least one of the rolling elements (10, 10', 10", 10‴) mounted one behind the other has the corrugated contact surface (19, 19').

11. The pull-out guide according to claim 10, **characterized in that** the running surfaces (20, 30; 20', 30'), on which a rolling element with the corrugated contact surface (19, 19') rolls, are provided with a lubricant.

12. The pull-out guide according to a claim 10 or 11, **characterized in that** the rolling element (10, 10', 10", 10‴) has a bearing point in the form of a spigot 13 or a recess 14, so that the rolling elements (10, 10', 10", 10‴) are secured against falling out of the rolling element cage (8, 8') in the rolling element cage (8, 8').

13. The pull-out guide according to one of the preceding claims, **characterized in that** the basic shape of the rolling element (10, 10', 10", 10‴) is cylindrical or ball-shaped in the region of a plurality of contact surfaces.

## Revendications

1. Guide coulissant (1, 1') ayant au moins deux rails (2, 3, 4, 2', 3', 4') mobiles d'un par rapport à l'autre et munis chacun d'au moins deux surfaces de circulation (20, 30 ; 20', 30') sur lesquelles est guidé au moins un organe de roulement (10, 10' ; 10", 10‴) qui roule par au moins une surface de contact 19, 19') le long de la surface de circulation (20, 30, 20', 30') respective, - au moins cette surface de contact (19, 19') au moins cet organe de roulement (10, 10', 10", 10‴) a une forme ondulée **caractérisé en ce que** la forme ondulée de la surface de contact (19, 19') a une forme sinusoïdale en développement.

2. Guide coulissant selon la revendication 1, **caractérisé en ce que** au moins cette surface de contact (19, 19') est formée par au moins un anneau (11, 11') qui a une forme ondulée dans la direction axiale et pratiquement le même rayon dans la direction radiale.

3. Guide coulissant selon la revendication 1 ou 2, **caractérisé en ce que** plusieurs anneaux (11, 11') juxtaposés, forment une surface de contact (19, 19').

4. Guide coulissant selon la revendication 3, **caractérisé en ce que** les anneaux sont réalisés en matière plastique, en métal ou en une matière composite.

5. Guide coulissant selon l'une des revendications précédentes, **caractérisé en ce que** le rapport de l'amplitude (B) de l'ondulation et de la largeur (b) de la surface de contact (19, 19') est compris entre 1,5 :1 et 5 :1 et en particulier entre 1,8 :1 et 3 :1.

6. Guide coulissant selon l'une des revendications précédentes, **caractérisé en ce que** les surfaces de circulation (20, 30 ; 20', 30') sur les rails (2, 3, 4 ; 2', 3', 4') sont au moins planes sur une partie de trajet.

7. Guide coulissant selon l'une des revendications précédentes, **caractérisé en ce que** en développement, par tour de l'organe de roulement (10, 10', 10", 10‴) on a au moins deux sommets sur les deux côtés.

8. Guide coulissant selon l'une des revendications précédentes, **caractérisé en ce que** une cannelure (12) ou une rainure (15) est prévue respectivement entre deux anneaux.

9. Guide coulissant selon l'une des revendications 2 à 8, **caractérisé en ce que** la forme géométrique de base de l'anneau (11, 11') se compose de quatre ou de six segments, et chaque segment correspond sensiblement à un quart ou un sixième de cercle.

10. Guide coulissant selon l'une des revendications précédentes, **caractérisé en ce que** le guide coulissant (1, 1') comporte des organes de roulement (10, 10', 10", 10‴) logés dans au moins une cage d'organe de roulement (8, 8'), - plusieurs organes de roulement (10, 10', 10", 10‴) roulant l'un derrière l'autre dans la cage sur les surfaces de circulation (20, 30 ; 20', 30'), et - au moins l'un des organes de roulement (10, 10', 10", 10‴) montés l'un derrière l'autre a la surface de contact ondulée (19, 19').

11. Guide coulissant selon la revendication 10, **caractérisé en ce que** les surfaces de circulation (20, 30 ; 20', 30') sur lesquelles roule un organe de roulement avec sa surface de contact ondulée (19, 19') est muni d'un agent lubrifiant.

12. Guide coulissant selon l'une des revendications 10 ou 11, **caractérisé en ce que** l'organe de roulement (10, 10', 10", 10‴) a un emplacement de palier sous la forme d'un appui (13) ou d'un évidement (14) de façon à fixer les organes de roulement (10, 10', 10", 10‴) dans la cage d'organe de roulement (8, 8') contre leur sortie de la cage de roulement (8, 8').

13. Guide coulissant selon l'une des revendications précédentes, **caractérisé en ce que** la forme de base de l'organe de roulement (10, 10', 10", 10‴) dans la zone de plusieurs surfaces de contact est de forme cylindrique ou bombée.
